# EUROPÄISCHE PATENTSCHRIFT

(11) **EP 1 641 640 B1**
(45) Veröffentlichungstag und Bekanntmachung des Hinweises auf die Patenterteilung: **09.05.2007**
(21) Anmeldenummer: 04739732.8
(22) Anmeldetag: 09.06.2004
(51) Int. Cl.: B60H 1/00, B60H 1/32

(54) **EINRICHTUNG ZUM KÜHLEN ODER ZUM ERWÄRMEN EINES GESCHLOSSENEN RAUMES SOWIE VERFAHREN ZUM BETRIEB EINER SOLCHEN EINRICHTUNG**
FACILITY FOR COOLING OR HEATING UP AN ENCLOSED SPACE AND METHOD FOR OPERATING SUCH A FACILITY
DISPOSITIF POUR REFROIDIR OU RECHAUFFER UN ESPACE FERME ET PROCEDE DE FONCTIONNEMENT D'UN DISPOSITIF DE CE TYPE

(30) Priorität: 26.06.2003 DE 10328966; 15.07.2003 DE 10332157
(43) Veröffentlichungstag der Anmeldung: 05.04.2006
(73) Patentinhaber: Behr GmbH & Co. KG, 70469 Stuttgart (DE)
(72) Erfinder: BARUSCHKE, Wilhelm, 73117 Wangen (DE); KAMPF, Hans, 71404 Korb (DE); LOCHMAHR, Karl, 71665 Vaihingen (DE)
(74) Vertreter: Grauel, Andreas
(86) Internationale Anmeldenummer: PCT/EP2004/006223
(87) Internationale Veröffentlichungsnummer: WO 2005/000609

(56) Entgegenhaltungen:
- EP-A- 1 000 784
- EP-A- 1 078 787
- EP-A- 1 258 375

## Beschreibung

Die vorliegende Erfindung betrifft eine kombinierte Einrichtung zum Kühlen oder zum Erwärmen eines geschlossenen Raumes (auch kurz Kühl- und Heizeinrichtung genannt), insbesondere eines Innenraumes eines Fahrzeugs. Soweit das Kühlen oder Erwärmen eines Fahrzeuginnenraums betroffen ist, wird eine solche kombinierte Kühl- und Heizeinrichtung auch als Klimaanlage bezeichnet. Als Einrichtung zum Kühlen eines Fahrzeuginnenraums ist eine Klimaanlage allgemein bekannt. Bekanntlich wird dabei ein der Funktionalität der Klimaanlage zugrunde liegender Kreisprozess zum Betrieb der Klimaanlage umgekehrt ausgeführt, so dass die Einrichtung auch als Wärmepumpe fungiert. Jede Kältemaschine, also z. B. eine Klimaanlage, umfasst einen Verdampfer mit dem Kälte durch Verdampfen niedrig siedender Flüssigkeiten oder verflüssigter Gase (Kältemittel) erzeugt wird. Jede Wärmepumpe umfasst einen Kondensator oder Gaskühler, mit dem einem komprimierten Medium, z. B. einem Kältemittel, die enthaltene Wärmeenergie entzogen wird. Dies erfolgt in an sich bekannter Weise mittels eines Drossel- oder Expansionsventils.

Bei einer kombinierten Kühl- und Heizeinrichtung tauschen Verdampfer und Gaskühler je nach Betriebsart ihre Funktion, d. h. ein Element der Kühl- und Heizeinrichtung, das bei deren Betrieb als Klimaanlage als Verdampfer fungiert, fungiert bei deren Betrieb als Wärmepumpe als Gaskühler. Entsprechend fungiert ein Element der Kühl- und Heizeinrichtung, das bei deren Betrieb als Wärmepumpe als Gaskühler fungiert, bei deren Betrieb als Klimaanlage als Verdampfer. Des Weiteren muss bei einer solchen kombinierten Kühl- und Heizeinrichtung je nach Betriebsart die Anordnung des Drosselventils im Prozess angepasst werden. Für solche kombinierten Kühl- und Heizeinrichtungen ist die Verwendung eines Kältemittels erforderlich, das nennenswerte Heizleistungen der Wärmepumpe zulässt.

Von Klimaanlagen oder kombinierten Kühl- und Heizeinrichtungen ist bekannt, dass sich die gesamte in den geschlossenen Raum eingetragene Feuchtigkeit am Verdampfer sammelt. Bei einer Prozessumkehr, also bei einem Betrieb einer kombinierten Kühl- und Heizeinrichtung zunächst als Klimaanlage und danach als Wärmepumpe wirkt sich die Feuchtigkeit des dann als Gaskühler fungierenden Verdampfers nachteilig aus. Ein nasser Gaskühler bewirkt eine Verteilung der Feuchtigkeit in dem geschlossenen Raum, was im Falle eines Fahrzeuginnenraums zu einem störenden, im Einzelfall sogar gefährlichen, weil sichthindernden Scheibenbeschlag, so genannten "Flash-Fog" führt.

Zur Vermeidung von unerwünschtem Scheibenbeschlag sind unterschiedliche Ansätze bekannt geworden. Ein erster Ansatz basiert auf einem zusätzlichem Gaskühler für die Wärmepumpe. Des Weiteren ist auch versucht worden, den Verdampfer zu trocknen. Ein anderer Ansatz versucht den Scheibenbeschlag dadurch zu vermeiden, indem bei drohendem Scheibenbeschlag in einem Kraftfahrzeug die Luftverteilung oder der Luftstrom derart geändert wird, dass die feuchte Luft hauptsächlich in den Fußraum des Fahrzeuginnenraums gelangt. Ein anderer Ansatz gemäß dem Oberbegriff der Ansprüche 1 und 10 wird in EP 1078787 offenbart.

Diese bekannten Lösungsvorschläge sind insofern noch nicht optimal, als sich für den gemäß dem ersten Ansatz zusätzlich erforderlichen Gaskühler Mehrkosten für das Element an sich und für die damit insgesamt komplexere Schaltung sowie ein erhöhter Platzbedarf der Gesamteinrichtung ergeben. Ein bekannt gewordener Vorschlag zur Trocknung des Verdampfers basiert auf Zeolithen. Die davon erforderlichen Mengen (mehr als 2,5 kg) müssen im Fahrzeug mitgeführt werden, was in ungünstiger Weise das Gesamtgewicht des Fahrzeugs und damit den Kraftstoffverbrauch erhöht. Zudem ist die Regeneration der Zeolithe ungeklärt. Schließlich ist der Vorschlag zur zeitlich begrenzten Änderung der Richtung des Luftstroms für Wärmepumpen nicht hinreichend.

Die Aufgabe der Erfindung besteht daher darin, ein Verfahren zum Betrieb einer kombinierten Kühl- und Heizeinrichtung sowie eine solche Kühl- und Heizeinrichtung selbst anzugeben, mit dem bzw. mit der unerwünschter Scheibenbeschlag unter Vermeidung der oben erwähnten Nachteile sicher verhindert wird.

Diese Aufgabe wird mit einer kombinierten Kühl- und Heizeinrichtung mit den Merkmalen des Anspruchs 1 gelöst. Dabei ist bei der kombinierten Kühl- und Heizeinrichtung zum Kühlen oder Erwärmen eines geschlossenen Raumes, die einen Verdampfer und einen Gaskühler umfasst und in einer ersten Betriebsart zum Kühlen des Raumes und einer zweiten Betriebsart zum Erwärmen des Raumes dient, vorgesehen, dass mindestens zwei funktionsvariable Elemente bereitgestellt sind, wobei ein in der ersten Betriebsart als Verdampfer fungierendes erstes funktionsvariables Element in der zweiten Betriebsart als Gaskühler fungiert und ein in der ersten Betriebsart als Gaskühler fungierendes zweites funktionsvariables Element in der zweiten Betriebsart als Verdampfer fungiert und wobei ein dem ersten funktionsvariablen Element vorgeschalteter Verdichter vom Ausgang eines ersten Regelkreises für Heizleistung und vom Ausgang eines zweiten Regelkreises für Flash-Fog-Regelung steuerbar ist. Dabei wird bevorzugt als erster Regelkreis zur Heizleistung eine Temperaturregelung mit Solltemperaturvorgabe und Wärmepumpenregler verwendet. Ein zweiter Regelkreis ist als Flash-Fog-Regler mit der Scheibentemperatur als Führungsgröße ausgebildet.

Die kombinierte Kühl- und Heizeinrichtung wird im folgenden auch als Klimaanlage bezeichnet. Bei dem geschlossenen Raum handelt es sich insbesondere um einen Innenraum eines Fahrzeugs.

Gleichfalls wird diese Aufgabe mit einem Verfahren zum Betrieb der kombinierten Kühl- und Heizeinrichtung mit den Merkmalen des Anspruchs 9 gelöst. Dabei ist bei dem Verfahren zum Betrieb der zum Kühlen oder Erwärmen eines geschlossenen Raumes, insbesondere eines Innenraumes eines Fahrzeugs, vorgesehenen kombinierten Kühl- und Heizeinrichtung (Klimaanlage), die einen Verdampfer und einen Gaskühler umfasst und in einer ersten Betriebsart zum Kühlen des Raumes und einer zweiten Betriebsart zum Erwärmen des Raumes dient, vorgesehen, dass mindestens zwei funktionsvariable Elemente bereitgestellt sind, wobei ein in der ersten Betriebsart als Verdampfer fungierendes erstes funktionsvariables Element in der zweiten .Betriebsart als Gaskühler fungiert und ein in der ersten Betriebsart als Gaskühler fungierendes zweites funktionsvariables Element in der zweiten Betriebsart als Verdampfer fungiert sowie wobei ein dem ersten funktionsvariablen Element vorgeschalteter Verdichter vom Ausgang eines ersten Regelkreises für Heizleistung und vom Ausgang eines zweiten Regelkreises für Flash-Fog-Regelung gesteuert wird.

Die Erfindung geht dabei von der Überlegung aus, dass der dem Betrieb einer Klimaanlage zugrunde liegende Kreisprozess in eine Wärmepumpe umgekehrt werden kann, wobei dann eine Beeinflussung der dazu erforderlichen Komponenten derart vorgesehen ist, dass diese mittels funktionsvariabler Elemente gleichzeitig durch zwei Regelkreise - einer Temperaturregelung für Heizleistung und eine Flash-Fog-Regelung - steuerbar sind. Der Vorteil der Erfindung besteht darin, dass unerwünschter Scheibenbeschlag (= Flash-Fog) in allen Betriebsphasen sicher vermieden wird.

Vorteilhafte Ausführungsformen der Erfindung sind Gegenstand der jeweils abhängigen Ansprüche.

Zweckmäßigerweise umfasst der erste Regelkreis zur Heizleistung eine Temperaturregelung mit Solltemperaturvorgabe und Wärmepumpenregler. Der zweite Regelkreis zur Flash-Fog-Regelung umfasst vorzugsweise eine Temperaturregelung mit Scheibensolltemperaturvorgabe und Flash-Fog-Regler. Zur Anpassung der Temperaturregelung des ersten Regelkreises an die tatsächlichen Gegebenheiten der Regelstrecke ist im ersten Regelkreis zweckmäßigerweise zusätzliche eine Kennlinie für Wärmepumpen-Modus (auch kurz Wärmepumpenkennlinie genannt) vorgesehen. Analog dazu umfasst der zweite Regelkreis vorteilhafterweise zur Anpassung der Flash-Fog-Regelung an die Regelstrecke eine Flash-Fog-Kennlinie. Mittels einer Minimalwert-Verknüpfung wird eines der beiden Ausgangssignale der Wärmepumpenkennlinie und der Flash-Fog-Kennlinie der beiden Regelkreise als Steuersignal zur Beeinflussung des Verdichter-Hubvolumen pulsweitenmoduliert dem Kompressor-Ventil zugeführt.

Bevorzugt ist dem Verdichter ein erster Pulsweitenmodulator vorgeschaltet. Dabei ist der erste Pulsweitenmodulator zwischen dem Verdichter einerseits und der Temperaturregelung und der Flash-Fog-Regelung andererseits angeordnet und steuert damit den Verdichter in Abhängigkeit vom ersten und/oder zweiten Regelkreis.

Aufgrund der Regelkreisanordnung ist immer sichergestellt, dass eine Aufsteuerung eines dem Verdichter zugeordneten Kompressor-Regelventils durch den Ausgang der Flash-Fog-Regelung über die Minimalwert-Funktion begrenzt ist. Vorteilhaft basiert die Temperaturregelung auf einem Temperatursensor zum Messen einer Temperatur im Bereich des ersten funktionsvariablen Elements, beispielsweise luftseitig nach dem ersten funktionsvariablen Element, wobei eine gemessene Temperatur der Temperaturregelung als Regelgröße zuführbar ist.

Zusätzlich basiert die Flash-Fog-Regelung vorteilhafterweise auf einem Feuchtesensor zum Messen einer Feuchte im Bereich des ersten funktionsvariablen Elements, beispielsweise luftseitig nach dem ersten funktionsvariablen Element, wobei die gemessene Feuchte zusammen mit der gemessenen Temperatur einer Taupunktberechnung und ein Ausgang der Taupunktberechnung der Flash-Fog-Regelung als Regelgröße zuführbar sind.

Ergänzend kann die Kühl- und Heizeinrichtung eine vom Flash-Fog-Regler des zweiten Regelkreises und vom Wärmepumpenregler des ersten Regelkreises ansteuerbare Kältemittelhochdruckregelung umfassen, die zur Beeinflussung eines dem ersten funktionsvariablen Element nachgeschalteten steuerbaren Expansionsventils vorgesehen ist. Zweckmäßigerweise ist zur Ansteuerung des Expansionsventils ein zweiter Pulsweitenmodulator, der zwischen Kältemittelhochdruckregelung und Expansionsventil angeordnet ist, vorgesehen. Mit anderen Worten: Das Expansionsventil wird beispielsweise pulsweitenmoduliert durch die Kältemittelhochdruckregeleinrichtung angesteuert.

Der Vorteil der Erfindung und ihrer Ausgestaltungen besteht vor allem darin, dass der Aufwand zur Realisierung der Funktionalität einer Wärmepumpe minimiert wird. Ein zusätzlicher Wärmetauscher, insbesondere ein zusätzlicher Gaskühler kann eingespart werden. Darüber hinaus ist die Anzahl erforderlicher Kältemittelventile und/oder Kältemittelleitungen reduziert. Der Hard- und Softwareaufwand zur Steuerung und/oder Regelung einer kombinierten Kühl- und Heizeinrichtung wird reduziert. Der zusätzlich erforderliche Feuchte- und Temperatursensor kann auch für weitere Klimatisierungsfunktionen sinnvoll genutzt werden.

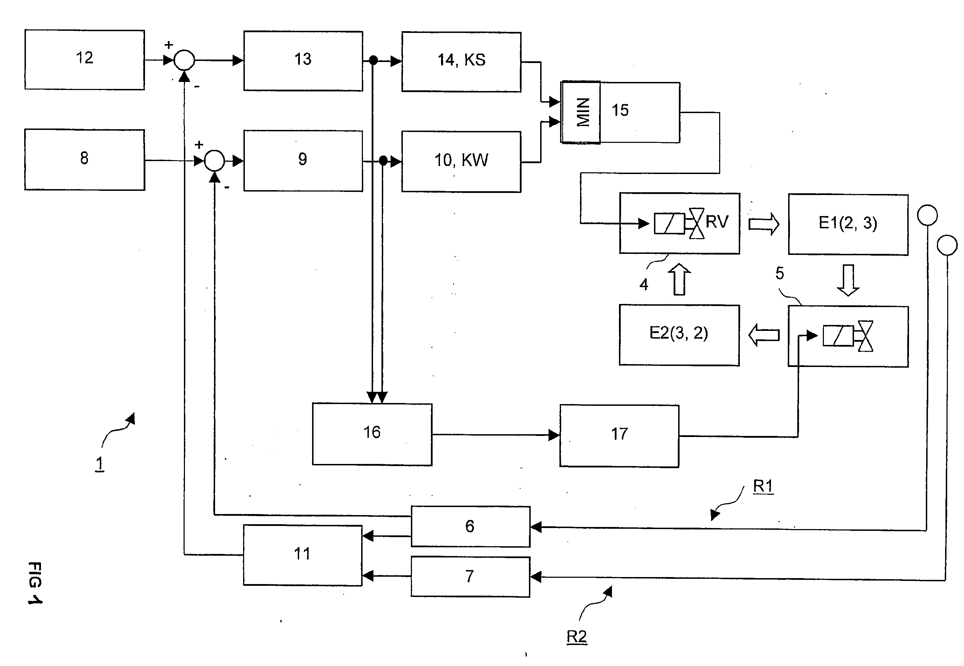

Nachfolgend wird ein Ausführungsbeispiel der Erfindung anhand der Zeichnung näher erläutert.

Darin zeigt die einzige Figur ein Blockschaltbild einer kombinierten Kühl- und Heizeinrichtung 1. Nachdem eine solche Kühl- und Heizeinrichtung 1 bevorzugt zum Kühlen oder Erwärmen von Innenräumen von Fahrzeugen verwendet wird, wird die Beschreibung für diesen bevorzugten Einsatzzweck fortgesetzt und die Kühl- und Heizeinrichtung 1 kurz als Klimaanlage 1 bezeichnet.

Die Klimaanlage 1 umfasst zwei funktionsvariable Elemente E1 und E2, deren Funktionalität - Gaskühler 2 oder Verdampfer 3 - durch jeweils eine von zwei möglichen Betriebsarten der Klimaanlage 1 - Heizen bzw. Kühlen - festgelegt ist. In einer ersten Betriebsart, die im folgenden auch als Normalbetriebsart oder Kühlbetrieb bezeichnet wird, wird die Klimaanlage 1 als Kühleinrichtung betrieben. In einer zweiten Betriebsart die im folgenden auch als Heizbetrieb bezeichnet wird, wird die Klimaanlage 1 als Wärmepumpe betrieben.

Ein erstes funktionsvariables Element E1 fungiert im Kühlbetrieb (Normalbetriebsart) als Verdampfer 3 und im Heizbetrieb als Gaskühler 2 (auch "Heizer" genannt). Ein zweites funktionsvariables Element E2 fungiert im Kühlbetrieb (Normalbetriebsart) als Gaskühler 2 und im Heizbetrieb als Verdampfer 3. Die jeweils als Gaskühler 2 fungierenden funktionsvariablen Elemente E1 und E2 bilden die zentrale Komponente im Wärmepumpenbetrieb. Weitere Bestandteile im Wärmepumpenbetrieb sind ein Verdichter 4, der als Kältemittelverdichter mit variablem Hubvolumen ausgeführt ist, und ein steuerbares Expansionsventil 5.

Am ersten funktionsvariablen Element E1, insbesondere am luftseitigen Ausgang wird mittels eines Temperatursensors 6 eine Temperatur T und mittels eines Feuchtesensors 7 eine Luftfeuchtigkeit L gemessen. Die gemessene Temperatur T geht sowohl in einen ersten Regelkreis R1 für Heizleistung als auch in einen zweiten Regelkreis R2 für Flash-Fog-Regelung ein.

Der erste Regelkreis R1 zur Heizleistung umfasst dabei eine Temperaturregelung mit einer Solltemperaturvorgabe 8 zum Erzeugen einer temperaturbezogenen Führungsgröße für die gewünschte Temperatur des Fahrzeuginnenraums, einen Wärmepumpenregler 9, sowie ggf. eine Einrichtung 10 zur Berücksichtigung einer Kennlinie KW der Wärmepumpe (auch kurz Wärmepumpenkennlinie KW genannt) und ist zur Regelung der Heizleistung der Wärmepumpe vorgesehen. Die Solltemperaturvorgabe 8 bestimmt damit direkt oder indirekt die Betriebsart der Klimaanlage 1.

Der zweite Regelkreis R2 für Flash-Fog-Regelung umfasst zum einen eine Taupunktberechnung 11 zur Berechnung eines Taupunkts aus der gemessenen Temperatur T und der gemessenen Luftfeuchtigkeit L. Der berechnete Taupunkt geht in eine Regelung zur Verhinderung von Scheibenbeschlag eines Flash-Fog-Reglers 13, im folgenden kurz als Flash-Fog-Regelung bezeichnet, ein. Zum anderen wird die Flash-Fog-Regelung von einer Scheibentemperatur 12, insbesondere von der Windschutzscheibentemperatur geführt, dem Flash-Fog-Regler 13 kann eine Einrichtung 14 zur Berücksichtigung einer Kennlinie KS (auch Flash-Fog-Kennlinie KS genannt) für eine angepasste Hubvolumensteuerung nachgeschaltet sein. Der zweite Regelkreis R2 ist zur Regelung des Taupunktes vorgesehen. Die Scheibentemperatur 12 wird nach bekannten Verfahren berechnet oder auch direkt gemessen. Die Leistung im Wärmepumpenbetrieb wird so eingestellt, dass der im Anschluss an das erste funktionsvariable Element E1 - dem Gaskühler ("Heizer") - ermittelte Taupunkt unterhalb der Scheibentemperatur liegt. Um etwaigen "Anlaufschwierigkeiten" im Wärmepumpenbetrieb vorzubeugen, wird für die Scheibentemperatur 12 ein erhöhter Wert, z. B. ein um 1 K erhöhter Wert, zugelassen.

Die Ausgangsgrößen beider Regelkreise R1 und R2 (Stellgröße) werden über eine Minimalwert-Funktion MIN einem ersten Pulsweitenmodulator 15 zugeführt. Der erste Pulsweitenmodulator 15 verarbeitet von den Stellgrößen jeweils den Minimalwert und bildet daraus in an sich bekannter Weise eine Signalfolge, die alternierend zwischen zwei Extremwerten - einem Maximalwert und Null - pendelt. Die Dauer des Anstehens des Maximalwertes zwischen zwei Signalwechseln ist dann proportional zum Minimum beider Stellgrößen unter Berücksichtigung der Kennlinien KS und KW. Die Austrittstemperatur, also die vom ersten funktionsvariablen Element E1 - Gaskühler ("Heizer") - abgegebene Temperatur T wird demnach vom Wärmepumpenregler 9 eingestellt. Als Leistungssteller dient der als Kältemittelverdichter, insbesondere als ein Kompressor mit variablem Hubvolumen ausgebildete Verdichter 4. Ein dem Verdichter 4 zugeordnetes Kompressor-Regelventil RV wird dabei nur soweit aufgesteuert, wie von der Stellgröße des Flash-Fog-Reglers 13 zugelassen.

Der Ausgang des Wärmepumpenreglers 9 sowie der Ausgang des Flash-Fog-Reglers 13 kann zusätzlich einer Kältemittelhochdruckregelung 16 zugeführt werden. Deren Ausgang wird über einen zweiten Pulsweitenmodulator 17 dem Expansionsventil 5 zugeführt.

Das Gesamtkonzept zur Steuerung der Klimaanlage 1 ist so ausgelegt, dass die maximal mögliche Heizleistung immer automatisch eingestellt ist und Scheibenbeschlag unter allen Umständen vermieden wird. Mit anderen Worten: Der Flash-Fog-Regler 13 begrenzt bei drohendem Scheibenbeschlag die vom Wärmepumpenregler 9 vorgegebene Aufsteuerung des Kompressor-Regelventils RV.

Damit lässt sich die vorliegende Erfindung zusammenfassend kurz wie folgt beschreiben:
Die Erfindung betrifft eine Einrichtung zum Kühlen oder zum Erwärmen eines geschlossenen Raumes sowie ein Verfahren zum Betrieb einer solchen Einrichtung, die in einer ersten Betriebsart als Kühleinrichtung und in einer zweiten Betriebsart als Wärmepumpe betreibbar ist und zwei funktionsvariable Elemente E1 und E2 umfasst, die in der ersten Betriebsart als Verdampfer bzw. Gaskühler und in der zweiten als Gaskühler bzw. Verdampfer fungieren, wobei ein einem der funktionsvariablen Elemente E1 bzw. E2 vorgeschalteter Verdichter 4 sowohl von einer Temperaturregelung als auch von einer Flash-Fog-Regelung ansteuerbar ist.

### Bezugszeichenliste

- 1: Kühl- und Heizeinrichtung/Klimaanlage
- 2: Gaskühler
- 3: Verdampfer
- 5: Expansionsventil
- 6: Temperatursensor
- 7: Feuchtesensor
- 8: Solltemperaturvorgabe
- 9: Wärmepumpenregler
- 10: Einrichtung zur Berücksichtigung der Wärmepumpenkennlinie
- 11: Taupunktberechnung
- 12: Scheibentemperatur
- 13: Flash-Fog-Regler
- 14: Einrichtung zur Berücksichtigung der Flash-Fog-Kennlinie
- 15: erster Pulsweitenmodulator
- 16: Kältemittelhochdruckregelung
- 17: zweiter Pulsweitenmodulator

- E1, E2: funktionsvariable Elemente
- KS: Flash-Fog-Kennlinie
- KW: Wärmepumpenkennlinie
- L: Feuchte
- MIN: Minimalwert-Funktion
- RV: Kompressor-Regelventil
- T: Temperatur

## Patentansprüche

1. Kombinierte Kühl- und Heizeinrichtung (1) zum Kühlen oder Erwärmen eines geschlossenen Raumes, insbesondere eines Innenraumes eines Fahrzeugs, mit einem Verdampfer (3) und einem Gaskühler (2) und mit einer ersten Betriebsart zum Kühlen des Raumes und einer zweiten Betriebsart zum Erwärmen des Raumes, und mit einem Flash-Fog-Regler (13) und mit einem Wärmepumpenregler (9), wobei mindestens zwei funktionsvariable Elemente (E1, E2) vorgesehen sind, wobei ein in der ersten Betriebsart als Verdampfer (3) fungierendes erstes funktionsvariables Element (E1) in der zweiten Betriebsart als Gaskühler (2) fungiert und dass ein in der ersten Betriebsart als Gaskühler (2) fungierendes zweites funktionsvariables Element (E2) in der zweiten Betriebsart als Verdampfer (3) fungiert, wobei ein dem ersten funktionsvariablen Element (E1) vorgeschalteter Verdichter (4) vom Ausgang eines ersten Regelkreises (R1) für Heizungsleistung und vom Ausgang eines zweiten Regelkreises (R2) für eine Flash-Fog-Regelung steuerbar ist, **gekennzeichnet durch** eine vom Flash-Fog-Regler (13) und vom Wärmepumpenregler (9) ansteuerbare Kältemittelhochdruckregelung (16), die zur Beeinflussung eines dem ersten funktionsvariablen Element (E1) nachgeschalteten steuerbaren Expansionsventils (5) vorgesehen ist.

2. Kühl- und Heizeinrichtung nach Anspruch 1, **gekennzeichnet durch** einen zweiten Pulsweitenmodulator (17), der zwischen Kältemittelhochdruckregelung (16) und Expansionsventil (5) angeordnet und zur Ansteuerung des Expansionsventils (5) vorgesehen ist.

3. Kühl- und Heizeinrichtung nach Anspruch 1 oder 2, **dadurch gekennzeichnet, dass** der erste Regelkreis (R1) eine Temperaturregelung mit Solltemperaturvorgabe (8) und Wärmepumpenregler (9) umfasst.

4. Kühl- und Heizeinrichtung nach einem der vorhergehenden Ansprüche, **dadurch gekennzeichnet, dass** der zweite Regelkreis (R2) eine Temperaturregelung mit einer Führungsgröße für Scheibentemperatur (12) und einen Flash-Fog-Regler (13) umfasst.

5. Kühl- und Heizeinrichtung nach einem der vorhergehenden Ansprüche, **dadurch gekennzeichnet, dass** der erste Regelkreis (R1) eine Temperaturregelung mit einer Wärmepumpenkennlinie (KW) und der zweite Regelkreis (R2) eine Flash-Fog-Regelung mit einer Flash-Fog-Kennlinie (KS) umfasst.

6. Kühl- und Heizeinrichtung nach Anspruch 4 oder 5, **dadurch gekennzeichnet, dass** dem Verdichter (4) ein erster Pulsweitenmodulator (15) vorgeschaltet ist, der eingangsseitig über eine Minimalwert-Funktion (MIN) mit dem Wärmepumpenregler (9) und dem Flash-Fog-Regler (13) beschaltet ist.

7. Kühl- und Heizeinrichtung nach einem der vorhergehenden Ansprüche, **dadurch gekennzeichnet, dass** eine Aufsteuerung eines dem Verdichter (4) zugeordneten Kompressor-Regelventils (RV) durch den Ausgang des zweiten Regelkreises (R2) der Flash-Fog-Regelung begrenzt ist.

8. Kühl- und Heizeinrichtung nach einem der vorangehenden Ansprüche, **gekennzeichnet durch** einen Temperatursensor (6) zum Messen einer Temperatur (T) im Bereich des ersten funktionsvariablen Elements (E1), wobei eine gemessene Temperatur (T) dem ersten und dem zweiten Regelkreis (R1, R2) als Regelgröße zuführbar ist.

9. Kühl- und Heizeinrichtung nach Anspruch 8, **gekennzeichnet durch** einen Feuchtesensor (7) zum Messen einer Feuchte (L) im Bereich des ersten funktionsvariablen Elements (E1), wobei die gemessene Feuchte (L) zusammen mit der gemessenen Temperatur (T) einer Taupunktberechnung (11) zuführbar ist und wobei ein Ausgang der Taupunktberechnung (11) dem zweiten Regelkreis (R2) zur Flash-Fog-Regelung als Regelgröße zuführbar ist.

10. Verfahren zum Betrieb einer zum Kühlen oder Erwärmen eines geschlossenen Raumes, insbesondere eines Innenraumes eines Fahrzeugs, vorgesehenen kombinierten Kühl- und Heizeinrichtung (1), die einen Verdampfer (3) und einen Gaskühler (2) umfasst und in einer ersten Betriebsart zum Kühlen des Raumes und einer zweiten Betriebsart zum Erwärmen des Raumes dient, und mit einem Flash-Fog-Regler (13) und mit einem Wärmepumpenregler (9), wobei mindestens zwei funktionsvariable Elemente (E1, E2) vorgesehen sind, wobei ein in der ersten Betriebsart als Verdampfer (3) fungierendes erstes funktionsvariables Element (E1) in der zweiten Betriebsart als Gaskühler (2) fungiert und ein in der ersten Betriebsart als Gaskühler (2) fungierendes zweites funktionsvariables Element (E2) in der zweiten Betriebsart als Verdampfer (3) fungiert, und wobei ein dem ersten funktionsvariablen Element (E1) vorgeschalteter Verdichter (4) vom Ausgang eines ersten Regelkreises (R1) für Heizungsleistung und vom Ausgang eines zweiten Regelkreises (R2) für eine Flash-Fog-Regelung gesteuert wird, **gekennzeichnet durch** eine vom Flash-Fog-Regler. (13) und vom Wärmepumpenregler (9) angesteuerte Kältemittelhochdruckregelung (16), die eine Stellung eines dem ersten funktionsvariablen Element (E1) nachgeschalteten steuerbaren Expansionsventils (5) beeinflusst.

11. Verfahren nach Anspruch 10, **dadurch gekennzeichnet, dass** der Verdichter (4) vom Ausgang des ersten Regelkreises (R1) einer Temperaturregelung mit Solltemperaturvorgabe (8) und Wärmepumpenregler (9) und ggf. mit einer Wärmepumpenkennlinie (KW) und vom Ausgang des zweiten Regelkreises (R2) einer Flash-Fog-Regelung mit einer Führungsgröße für Scheibentemperatur (12) und mit einem Flash-Fog-Regler (13) und ggf. mit einer Flash-Fog-Kennlinie (KS) gesteuert wird.

12. Verfahren nach Anspruch 11, **dadurch gekennzeichnet, dass** ein dem Verdichter (4) zugeordnetes Kompressor-Regelventil (RV) in Abhängigkeit vom Ausgang des Flash-Fog-Reglers (13) und vom Ausgang des Wärmepumpenreglers (9) gesteuert wird.

13. Verfahren nach einem der Ansprüche 10 bis 12, **gekennzeichnet durch** einen Temperatursensor (6) zum Messen einer Temperatur (T) im Bereich des ersten funktionsvariablen Elements (E1), wobei eine gemessene Temperatur (T) dem ersten Regelkreis (R1) als Regelgröße zugeführt wird.

14. Verfahren nach Anspruch 13, **gekennzeichnet durch** einen Feuchtesensor (7) zum Messen einer Feuchte (L) im Bereich des ersten funktionsvariablen Elements (E1), wobei die gemessene Feuchte (L) zusammen mit der gemessenen Temperatur (T) einer Taupunktberechnung (11) und ein Ausgang der Taupunktberechnung (11) dem zweiten Regelkreis (R2) zur Flash-Fog-Regelung als Regelgröße zugeführt wird.

## Claims

1. Combined cooling and heating facility (1) for cooling or heating an enclosed space, particularly the inner space of a vehicle, with an evaporator (3) and a gas cooler (2) and with a first operating mode for cooling the space and a second operating mode for heating the space and with a flash fog controller (13) and with a heat pump controller (9), wherein at least two variable-function elements (E1, E2) are provided, wherein a first variable-function element (E1) functioning as an evaporator (3) in the first operating mode functions as a gas cooler (2) in the second operating mode and a second variable-function element (E2) functioning as a gas cooler (2) in the first operating mode functions as an evaporator (3) in the second operating mode, wherein a compressor (4) arranged before the first variable-function element (E1) is adapted to be controlled by the output of a first control circuit (R1) for heat output and by the output of a second control circuit (R2) for flash fog control, **characterised by** a refrigerant high pressure control (16) which is adapted to be controlled by the flash fog controller (13) and by the heat pump controller (9) and which is provided for influencing a controllable expansion valve (5) arranged after the first variable-function element (E1).

2. Cooling and heating facility according to claim 1, **characterised by** a second pulse width modulator (17) which is arranged between the refrigerant high pressure control (16) and the expansion valve (5) and is provided for controlling the expansion valve (5).

3. Cooling and heating facility according to claim 1 or 2, **characterised in that** the first control circuit (R1) comprises a temperature control with reference temperature indication (8) and a heat pump controller (9) .

4. Cooling and heating facility according to one of the preceding claims, **characterised in that** the second control circuit (R2) comprises a temperature control with a reference variable for windscreen temperature (12) and a flash fog controller (13).

5. Cooling and heating facility according to one of the preceding claims, **characterised in that** the first control circuit (R1) comprises a temperature control with a heat pump characteristic curve (KW) and the second control circuit (R2) comprises a flash fog control with a flash fog characteristic curve (KS).

6. Cooling and heating facility according to claim 4 or 5, **characterised in that** a first pulse width modulator (15) is arranged before the compressor (4), said pulse width modulator (15) being connected on the input side, via a minimal value function (MIN), to the heat pump controller (9) and the flash fog controller (13).

7. Cooling and heating facility according to one of the preceding claims, **characterised in that** a control of a compressor control valve (RV) assigned to the compressor (4) is defined by the output of the second control circuit (R2) of the flash fog control.

8. Cooling and heating facility according to one of the preceding claims, **characterised by** a temperature sensor (6) for measuring a temperature (T) in the region of the first variable-function element (E1), wherein a measured temperature (T) can be supplied to the first and the second control circuit (R1, R2) as a control variable.

9. Cooling and heating facility according to claim 8, **characterised by** a moisture sensor (7) for measuring moisture (L) in the region of the first variable-function element (E1), wherein the measured moisture (L) together with the measured temperature (T) can be supplied to a dew point calculation (11) and wherein an output of the dew point calculation (11) can be supplied, as a control variable, to the second control circuit (R2) for flash fog control.

10. Method for operating a combined cooling and heating facility (1) provided for cooling or heating an enclosed space, particularly the inner space of a vehicle, which comprises a compressor (3) and a gas cooler (2) and serves in a first operating mode for cooling the space and in a second operating mode for heating the space and with a flash fog controller (13) and with a heat pump controller (9), wherein at least two variable-function elements (E1, E2) are provided, wherein a first variable-function element (E1) functioning as an evaporator (3) in the first operating mode functions as a gas cooler (2) in the second operating mode and a second variable-function element (E2) functioning as a gas cooler (2) in the first operating mode functions as an evaporator (3) in the second operating mode, and wherein a compressor (4) arranged before the first variable-function element (E1) is controlled by the output of a first control circuit (R1) for heat output and by the output of a second control circuit (R2) for flash fog control, **characterised by** a refrigerant high pressure control (16) controlled by the flash fog controller (13) and by the heat pump controller (9) which influences a position of a controllable expansion valve (5) arranged after the first variable-function element (E1).

11. Method according to claim 10, **characterised in that** the compressor (4) is controlled by the output of the first control circuit (R1) of a temperature control with reference temperature indication (8) and heat pump controller (9) and possibly with a heat pump characteristic curve (KW) and by the output of the second control circuit (R2) of a flash fog control with a reference variable for windscreen temperature (12) and with a flash fog controller (13) and possibly with a flash fog characteristic curve (KS).

12. Method according to claim 11, **characterised in that** a compressor control valve (RV) assigned to the compressor (4) is controlled in dependence upon the output of the flash fog controller (13) and upon the output of the heat pump controller (9).

13. Method according to one of the claims 10 to 12, **characterised by** a temperature sensor (6) for measuring a temperature (T) in the region of the first variable-function element (E1), wherein a measured temperature (T) is supplied to the first control circuit (R1) as a control variable.

14. Method according to claim 13, **characterised by** a moisture sensor (7) for measuring moisture (L) in the region of the first variable-function element (E1), wherein the measured moisture (L), together with the measured temperature (T), is supplied to a dew point calculation (11) and an output of the dew point calculation (11) is supplied, as a control variable, to the second control circuit (R2) for flash fog control.

## Revendications

1. Dispositif combiné (1) de refroidissement et de chauffage servant à refroidir ou à réchauffer un espace fermé, en particulier l'habitacle d'un véhicule, comprenant un évaporateur (3) et un refroidisseur des gaz (2) et comprenant un premier mode de fonctionnement pour le refroidissement de l'espace et un deuxième mode de fonctionnement pour le réchauffement de l'espace, et comprenant un régulateur (13) de désembuage immédiat et un régulateur (9) de pompe à chaleur, où il est prévu au moins deux éléments (E1, E2) à fonction variable, où un premier élément (E1) à fonction variable fonctionne comme évaporateur (3) dans le premier mode de fonctionnement, comme refroidisseur des gaz (2) dans le deuxième mode de fonctionnement, et un deuxième élément (E2) à fonction variable fonctionne comme refroidisseur des gaz (2) dans le premier mode de fonctionnement, comme évaporateur (3) dans le deuxième mode de fonctionnement, où un compresseur (4), monté en amont du premier élément (E1) à fonction variable, peut être réglé à partir de la sortie d'un premier circuit de régulation (R1) pour la puissance de chauffage, et à partir de la sortie d'un deuxième circuit de régulation (R2) pour une régulation de désembuage immédiat, **caractérisé par** une régulation à haute pression (16) du fluide frigorigène pouvant être pilotée par le régulateur (13) de désembuage immédiat et par le régulateur (9) de pompe à chaleur, régulation à haute pression du fluide frigorigène qui est prévue pour exercer une influence sur un détendeur (5) réglable et monté en aval du premier élément (E1) à fonction variable.

2. Dispositif de refroidissement et de chauffage selon la revendication 1, **caractérisé par** un deuxième modulateur d'impulsions en largeur (17) qui est disposé entre la régulation à haute pression (16) du fluide frigorigène et le détendeur (5) et prévu pour le réglage du détendeur (5).

3. Dispositif de refroidissement et de chauffage selon la revendication 1 ou 2, **caractérisé en ce que** le premier circuit de régulation (R1) comprend une régulation de température comprenant une valeur prédéfinie de température théorique (8) et un régulateur (9) de pompe à chaleur.

4. Dispositif de refroidissement et de chauffage selon l'une quelconque des revendications précédentes, **caractérisé en ce que** le deuxième circuit de régulation (R2) comprend une régulation de température comprenant une variable de guidage pour la température (12) des vitres et un régulateur (13) de désembuage immédiat.

5. Dispositif de refroidissement et de chauffage selon l'une quelconque des revendications précédentes, **caractérisé en ce que** le premier circuit de régulation (R1) comprend une régulation de température comprenant une courbe caractéristique (KW) de la pompe à chaleur, et le deuxième circuit de régulation (R2) comprend une régulation de désembuage immédiat comprenant une courbe caractéristique de désembuage immédiat (KS).

6. Dispositif de refroidissement et de chauffage selon la revendication 4 ou 5, **caractérisé en ce qu'**un premier modulateur d'impulsions en largeur (15) est monté en amont du compresseur (4), modulateur d'impulsions en largeur qui, via une fonction à valeur minimale (MIN), est connecté, côté entrée, au régulateur (9) de pompe à chaleur et au régulateur (13) de désembuage immédiat.

7. Dispositif de refroidissement et de chauffage selon l'une quelconque des revendications précédentes, **caractérisé en ce qu'**une commande d'ouverture d'une vanne de régulation (RV) du compresseur, associée au compresseur (4), est limitée par la sortie du deuxième circuit de régulation (R2) de la régulation de désembuage immédiat.

8. Dispositif de refroidissement et de chauffage selon l'une quelconque des revendications précédentes, **caractérisé par** un capteur de température (6) servant à mesurer une température (T) dans la zone du premier élément (E1) à fonction variable, où une température mesurée (T) peut être fournie comme variable de réglage, au premier et au deuxième circuits de régulation (R1, R2).

9. Dispositif de refroidissement et de chauffage selon la revendication 8, **caractérisé par** un capteur d'humidité (7) servant à mesurer une humidité (L) dans la zone du premier élément (E1) à fonction variable, où l'humidité mesurée (L), associée à la température mesurée (T), peut être fournie à un calcul (11) du point de rosée, et où un résultat du calcul (11) du point de rosée peut être fourni au deuxième circuit de régulation (R2), comme variable de réglage pour la régulation de désembuage immédiat.

10. Procédé de fonctionnement d'un dispositif combiné de refroidissement et de chauffage (1) prévu pour refroidir ou réchauffer un espace fermé, en particulier l'habitacle d'un véhicule, dispositif combiné de refroidissement et de chauffage qui comprend un évaporateur (3) et un refroidisseur des gaz (2) et sert, dans un premier mode de fonctionnement, au refroidissement de l'espace et, dans un deuxième mode de refroidissement, au réchauffement de l'espace, et comprenant un régulateur (13) de désembuage immédiat et un régulateur (9) de pompe à chaleur, où il est prévu au moins deux éléments (E1, E2) à fonction variable, où un premier élément (E1) à fonction variable fonctionne comme évaporateur (3) dans le premier mode de fonctionnement, comme refroidisseur des gaz (2) dans le deuxième mode de fonctionnement, et un deuxième élément (E2) à fonction variable fonctionne comme refroidisseur des gaz (2) dans le premier mode de fonctionnement, comme évaporateur (3) dans le deuxième mode de fonctionnement, et où un compresseur (4) monté en amont du premier élément (E1) à fonction variable est réglé à partir de la sortie d'un premier circuit de régulation (R1) pour la puissance de chauffage et à partir de la sortie d'un deuxième circuit de régulation (R2) pour une régulation de désembuage immédiat, **caractérisé par** une régulation à haute pression (16) du fluide frigorigène pilotée par le régulateur (13) de désembuage immédiat et par le régulateur (9) de pompe à chaleur, régulation à haute pression du fluide frigorigène qui influence une position d'un détendeur (5) réglable et monté en aval du premier élément (E1) à fonction variable.

11. Procédé selon la revendication 10, **caractérisé en ce que** le compresseur (4) est commandé à partir de la sortie du premier circuit de régulation (R1) d'une régulation de température comportant une valeur prédéfinie (8) de température théorique et un régulateur (9) de pompe à chaleur et, le cas échéant, comportant une courbe caractéristique (KW) de la pompe à chaleur, et commandé à partir de la sortie du deuxième circuit de régulation (R2) d'une régulation de désembuage immédiat comportant une variable de guidage pour la température (12) des vitres et comportant, le cas échéant, un régulateur (13) de désembuage immédiat et, le cas échéant, une courbe caractéristique de désembuage immédiat (KS).

12. Procédé selon la revendication 11, **caractérisé en ce qu'**une vanne de régulation (RV) du compresseur, associée au compresseur (4), est commandée en fonction de la sortie du régulateur (13) de désembuage immédiat et de la sortie du régulateur (9) de pompe à chaleur.

13. Procédé selon l'une quelconque des revendications 10 à 12, **caractérisé par** un capteur de température (6) servant à mesurer une température (T) dans la zone du premier élément (E1) à fonction variable, où une température mesurée (T) est fournie au premier circuit de régulation (R1), comme variable de réglage.

14. Procédé selon la revendication 13, **caractérisé par** un capteur d'humidité (7) servant à mesurer une humidité (L) dans la zone du premier élément (E1) à fonction variable, où l'humidité mesurée (L), associée à la température mesurée (T), est fournie à un calcul (11) du point de rosée, et un résultat du calcul (11) du point de rosée est fourni au deuxième circuit de régulation (R2), comme variable de réglage pour la régulation de désembuage immédiat.
